Europäisches Patentamt

European Patent Office

Office européen des brevets

(19)

(11) EP 0 662 159 B1

## (12) FASCICULE DE BREVET EUROPEEN

(45) Date de publication et mention
de la délivrance du brevet:
**18.09.1996 Bulletin 1996/38**

(21) Numéro de dépôt: **94922900.9**

(22) Date de dépôt: **11.07.1994**

(51) Int Cl.⁶: **C22C 21/00**, C22B 21/06, C25C 3/24

(86) Numéro de dépôt international:
**PCT/FR94/00862**

(87) Numéro de publication internationale:
**WO 95/03434 (02.02.1995 Gazette 1995/06)**

### (54) PROCEDE DE PREPARATION D'ALUMINIUM ELECTRORAFFINE A BASSE TENEUR EN URANIUM, THORIUM ET TERRES RARES

VERFAHREN ZUM HERSTELLEN VON ELEKTROLYTISCH GEREINIGTEN ALUMINIUM MIT NIEDRIGEN GEHALTEN AN URAN, THORIUM UND SELTENEN ERDMETALLEN

METHOD FOR PRODUCING ELECTROREFINED ALUMINIUM WITH LOW URANIUM, THORIUM AND RARE EARTH CONTENT

(84) Etats contractants désignés:
**DE GB**

(30) Priorité: **22.07.1993 FR 9309254**

(43) Date de publication de la demande:
**12.07.1995 Bulletin 1995/28**

(73) Titulaire: **ALUMINIUM PECHINEY**
**92400 Courbevoie (FR)**

(72) Inventeur: **LEROY, Michel**
**F-38120 Saint-Egrève (FR)**

(74) Mandataire: **Mougeot, Jean-Claude et al**
**PECHINEY**
**28, rue de Bonnel**
**69433 Lyon Cedex 03 (FR)**

(56) Documents cités:
EP-A- 0 459 303     CH-A- 198 199
CH-A- 217 552     DE-C- 1 080 786
FR-A- 759 588     FR-A- 832 528
FR-A- 1 594 154     FR-A- 2 445 380

• JOM, Novembre 1990, WARRENDALE US pages 36 - 37 M.KONDO ET AL.
• METALL, vol.27, no.3, Mars 1973, BERLIN & HEIDELBERG DE pages 203 - 211 W. D. HANNIBAL ET AL.

**Description**

DOMAINE TECHNIQUE

L'invention est relative à un procédé de préparation d'aluminium de pureté supérieure à 99,998% issu de raffinage électrolytique.

ART ANTERIEUR

L'aluminium de haute pureté utilisé par exemple pour la métallisation des circuits électroniques nécessite des teneurs extrêmement limitées en impuretés, en particulier celles qui risquent d'émettre des particules alpha pouvant modifier le contenu des mémoires du circuit.

D'une façon générale, au moins 3 catégories d'aluminium de haute pureté sont utilisées par les fabricants de circuits, après le plus souvent addition d'éléments d'alliages de haute pureté:

- une première catégorie, pour les applications les moins sévères, spécifie une teneur en uranium+thorium inférieure à 20 ppb (parties par milliard soit $10^{-3}$ ppm) et une teneur minimale en aluminium supérieure à 99,998%.
- une deuxième catégorie, pour les applications les plus habituelles, spécifie une teneur en U+Th inférieure à 5 ppb et une teneur minimale en Al supérieure à 99,999%.
- une troisième catégorie, pour les applications les plus exigeantes, spécifie une teneur minimale en Al supérieure à 99,9995% (et même parfois à 99,9997%) et une teneur en U+Th inférieure à 1 ppb, et même parfois à 0,3 ou 0,1 ppb. Les terres rares, dont certaines, comme le samarium, présentent une radioactivité alpha notable, sont également indésirables. Par exemple, 10 ppb de samarium naturel émettent autant de particules alpha que 0,1 ppb d'uranium 238.

L'aluminium de haute pureté utilisé pour cette application est généralement obtenu en deux étapes successives:

a) un raffinage electrolytique par le procédé connu sous le nom d'électrolyse 3 couches, tel que décrit par exemple dans les brevets français 759588 et 832528.

Ces 3 couches, maintenues à une température d'au moins 700°C sont successivement:

- au fond un alliage dense aluminium-cuivre à raffiner, au potentiel anodique.
- au milieu un bain d'électrolyte constitué d'un mélange fondu de fluorures et éventuellement de chlorures flottant sur l'alliage du fond.
- au dessus l'aluminium très pur cathodique flottant sur le bain.

Le raffinage s'effectue par transfert de l'aluminium de l'alliage de fond à la couche de surface en laissant dans l'alliage de fond impur les impuretés plus nobles que l'aluminium, et par oxydation des impuretés métalliques moins nobles que l'aluminium qui sont piégées dans le bain. On constate cependant que le raffinage électrolytique, très efficace pour éliminer les impuretés majeures de l'aluminium primaire, telles que Fe, Si, Ga, Zn, est par contre très peu efficace pour éliminer certaines impuretés particulières, telles que l'uranium, le thorium et les terres rares, toujours présents dans l'aluminium à raffiner, mais aussi dans les sels halogénés qui constituent ou corrigent le bain d'électroraffinage. Ces derniers peuvent même contribuer, dans certains cas, à faire remonter les teneurs de ces éléments. La raison de cette inefficacité vis à vis de ces impuretés particulières reste inexpliquée.

Ainsi, le métal raffiné électrolytiquement à partir d'aluminium primaire, même de haute pureté, ou même à partir d'aluminium déjà raffiné électrolytiquement, contient toujours plus de 50 ppb d'U+Th et plus de 200ppb de terres rares (essentiellement La, Ce, Nd, Pr, Sm).

C'est pourquoi cette étape de raffinage électrolytique est, pour l'application visée, toujours suivie d'une seconde étape de purification visant à éliminer ces impuretés néfastes.

b) une purification physique du métal électroraffiné par differents procédés tels que le tirage de cristaux par la méthode CZOCHRALSKY, la fusion de zone ou la ségrégation. Ce dernier procédé est décrit par exemple dans le brevet français 1594154 (=US3671229). Il consiste à refroidir dans un creuset l'aluminium à purifier dans des conditions thermiques bien déterminées pour recueillir et séparer les cristaux formés qui sont plus lourds et plus purs que le liquide environnant. Par refusions et resolidifications successives, accompagnées d'un tassage permettant d'expulser le liquide impur résiduel piégé entre les cristaux, on obtient au fond du creuset un métal très pur, alors que la partie supérieure, restée liquide, contient la plus grande partie des impuretés eutectiques initialement contenues dans le métal à purifier.

Un exemple de l'application successive de ces deux techniques pour obtenir un aluminium à 99,999% de pureté est illustré par le brevet français 2445380 (=US4222830).

Comme le mentionne ce brevet, l'étape de cristallisation fractionnée a, en général, un rendement métal médiocre, compris entre 30 et 70% selon la pureté du métal que l'on souhaite obtenir. Ceci amène à déclasser une partie importante du métal précédemment electroraffiné et augmente les coûts opératoires ramenés à la fraction utilisable du métal.

OBJET DE L'INVENTION

L'invention a pour objet un procédé économique de préparation d'aluminium de pureté supérieure à 99,998% dont la teneur en éléments des terres rares soit inférieure à 100 ppb et la teneur totale en uranium et thorium inférieure à 20 ppb, consistant à effectuer une cristallisation fractionnée préalable, avec un rendement en métal prépurifié compris entre 50 et 80%, puis à soumettre ce métal prépurifié à un raffinage electrolytique du type 3 couches avec un rendement en métal purifié final supérieur à 90%.

DESCRIPTION DE L'INVENTION

La première opération consiste à purifier très sensiblement l'aluminium primaire en éléments eutectiques, en particulier en uranium, thorium, leurs descendants de fission radioactifs et en terres rares (lanthane, cérium, néodyme, praséodyme, samarium) par une opération préalable de cristallisation fractionnée, par exemple une ségrégation telle que décrite dans le brevet français 1594154. Un rendement en métal prépurifié compris entre 50 et 80% permet de diviser par plus de 10, et même souvent par 100, les teneurs du métal dans ces impuretés particulières.

Cette opération, effectuée avec un cycle rapide et un bon rendement métal, donc un taux limité de déclassement de métal impur, et en utilisant un creuset de pureté standard, se fait dans des conditions économiques intéressantes, d'autant que le coût de déclassement du métal primaire impur, enrichi en impuretés eutectiques, est faible.

La seconde étape consiste à alimenter avec ce métal préalablement ségrégé et déjà sensiblement débarrassé de ses impuretés émettrices de particules alpha, la cuve de raffinage électrolytique selon le procédé 3 couches.

Pour améliorer encore la pureté du métal obtenu, on peut purifier les sels (par exemple fluorures de sodium et d'aluminium,chlorure ou fluorure de baryum) utilisés pour la constitution du bain electrolytique et ceux qu'il faut ajouter en cours d'opération pour maintenir ce bain à sa composition initiale afin de compenser les pertes.

Pour ce faire, on met au contact ces sels avec une masse d'aluminium fondu capable de réduire les impuretés plus nobles que l'aluminium et les absorber.

Cette mise en contact peut se faire de différentes manières, par exemple dans un creuset indépendant de la cuve de raffinage ou bien à travers un anneau en graphite traversant la couche supérieure de métal raffiné. Dans ce dernier cas, on alimente la couche de bain d'électrolyte liquide en sels solides servant à la correction de la composition du bain à travers l'anneau, en maintenant dans cet anneau une masse d'aluminium fondu capable de réduire les impuretés des sels et de les absorber. Cette masse d'aluminium fondu sera retirée de l'anneau en graphite avant d'enlever celui-ci.

On peut ainsi obtenir un aluminium à plus de 99,999% de pureté particulièrement pauvre en uranium, thorium et terres rares avec les teneurs suivantes en impuretés:

$$Si < 2ppm$$

$$Fe < 2ppm$$

$$Cu < 2ppm$$

$$U+Th < 20ppb$$

$$La+Ce+Nd+Pr+Sm < 100ppb$$

alors que l'aluminium électroraffiné produit classiquement à partir d'aluminium primaire non prétraité contient toujours plus de 50 ppb d'U+Th et plus de 200 ppb de terres rares. Dans le cas où l'on souhaite, pour les applications les plus exigeantes, un aluminium de très haute pureté à plus de 99,9995% avec une teneur en U+Th < 0,1 ppb, on procède, sur le métal électroraffiné tel que décrit précédemment, à une opération supplémentaire rapide de purification physique, par exemple par ségrégation, fusion de zone ou tirage de cristaux CZOCHRALSKY. On utilise pour ce faire un creuset ou une nacelle de haute pureté, généralement en graphite, ayant eux-mêmes une teneur contrôlée en U+Th<1 ppm pour éviter toute contamination du métal par le creuset. Il est connu, en effet, que les creusets de ségrégation ont une durée de vie limitée et sont donc consommables, ce qui alourdit le coût de fabrication. Mais, comme cette troisième étape se fait à cycle rapide, donc à rendement métal élevé, compris entre 30 et 80% mais le plus souvent supérieur à 50%, on aboutit, pour l'ensemble de la préparation, à un rendement métal global nettement supérieur à celui de l'art antérieur. De ce fait, le coût ramené à la tonne de métal produit selon l'invention est bien plus faible.

EXEMPLE 1

On a produit de l'aluminium raffiné électrolytiquement par le procédé 3 couches, d'une part à partir de métal primaire à 99,92% et d'autre part à partir du même métal purifié par ségrégation à 99,99%. Pour le procédé de l'art antérieur, on a effectué, après le raffinage électrolytique, dans un cas une ségrégation dans un creuset standard, par exemple en plombagine, mélange cuit de carbure de silicium, d'argile et de graphite, conduisant à un aluminium à 99,999% et, dans l'autre cas, une ségrégation en creuset haute pureté conduisant à un aluminium à 99,9995%.

Pour le procédé selon l'invention, on a réalisé, après le raffinage électrolytique, une ségrégation rapide en creuset haute pureté, pour obtenir un aluminium à 99,9998%.

Le tableau joint indique les teneurs respectives en uranium, thorium et terres rares aux differents stades de fabrication, ainsi que les rendements métal de chacune des opérations. on constate que, pour obtenir de l'aluminium à 99,999%, le rendement métal dans le procédé de l'art antérieur est de 0,97x0,5 = 0,485 tandis que dans le procédé de l'invention, il est de 0,7x0,97 = 0,679.

Pour l'aluminium à 99,9995%, le rendement métal est de 0,97x0,3 = 0,291 pour l'art antérieur et de 0,679x0,6 = 0,407 pour l'invention.

EXEMPLE 2

On part d'un métal primaire à 99,6%, nettement moins pur que dans l'exemple précédent. Les teneurs respectives en uranium, thorium et terres rares, ainsi que les rendements métal aux différents stades de fabrication sont indiqués dans le tableau 2. Par le procédé de l'art antérieur, comportant un raffinage électrolytique 3 couches et une ségrégation dans un creuset en plombagine, on obtient un métal à 15 ppb d'uranium, 18 ppb de thorium et 130 ppb de terres rares, avec un rendement métal de 0,97x0,5 = 0,485.

Par le procédé selon l'invention, on obtient, par ségrégation rapide dans un creuset standard en plombagine puis raffinage électrolytique 3 couches, un aluminium à 4 ppb d'uranium, 11 ppb de thorium et 70 ppb de terres rares, avec un rendement métal de 0,7x0,97 = 0,679.

## TABLEAU 1

### METAL DE DEPART

```
Al  =      99,92%
U   =     150 ppb
Th  =      50 ppb
TR  =     800 ppb
```

**ART ANTERIEUR**

Raffinage électrolytique
Rendement 97%

```
Al  =   99,996%
U   =   70 ppb
Th  =  140 ppb
TR  =  120 ppb
```

Ségrégation          Ségrégation
Cycle long           Cycle long
Creuset standard     Creuset HP
Rendement 50%        Rendement 30%

```
Al  =   99,999%        Al  = 99,9995%
U   =    1 ppb         U   =  0,15 ppb
Th  =    3 ppb         Th  =  0,20 ppb
TR  =   40 ppb         TR  =  2 ppb
```

**INVENTION**

Ségrégation
Cycle rapide
Creuset standard
rendement 70%

```
Al  =   99,990%
U   =    3 ppb
Th  =    2 ppb
TR  =   20 ppb
```

Raffinage électrolytique
Rendement 97%

```
Al  =   99,999%
U   =    1 ppb
Th  =    3 ppb
TR  =   40 ppb
```

Ségrégation rapide
Creuset HP
Rendement 60%

```
Al  = 99,9998%
U   <   0,05 ppb
Th  <   0,05 ppb
TR  <   1 ppb
```

## TABLEAU 2

### METAL DE DEPART

```
Al  =   99,6%
U   =  120 ppb
Th  =   30 ppb
TR  = 1200 ppb
```

**ART ANTERIEUR**                                          **INVENTION**

Raffinage électrolytique                                   Ségrégation
Rendement 97%                                              Cycle court
                                                           Creuset standard

```
Al  =   99,99%
U   =  180 ppb
Th  =   60 ppb
TR  = 1500 ppb
```

```
Al  =   99,97%
U   =   10 ppb
Th  =    6 ppb
TR  =   50 ppb
```

Ségrégation cycle long                                     Raffinage électrolytique
Creuset standard                                           Rendement 97%
Rendement 50%

```
Al  =   99,999%
U   =   15 ppb
Th  =   18 ppb
TR  =  130 ppb
```

```
Al  =   99,998%
U   =    4 ppb
Th  =   11 ppb
TR  =   70 ppb
```

**Revendications**

1.  Procédé de préparation d'aluminium de pureté supérieure à 99,998% à teneur en terres rares inférieure à 100 ppb et à teneur totale en uranium et thorium inférieure à 20 ppb, caractérisé en ce qu'on effectue une première opération de cristallisation fractionnée avec un rendement en métal prépurifié compris entre 50 et 80%, puis qu'on procède à un raffinage électrolytique de ce métal prépurifié par le procédé 3 couches en bain de sels halogénés fondus, avec un rendement en métal purifié final supérieur à 90%.

2.  Procédé selon la revendication 1, caractérisé en ce qu'on purifie au préalable les sels halogénés utilisés pour la constitution et la correction du bain electrolytique.

3.  Procédé selon la revendication 2, caractérisé en ce que la purification des sels se fait par mise en contact avec de l'aluminium liquide.

4.  Procédé de préparation d'aluminium de très haute pureté, supérieure à 99,9995%, contenant moins de 0,1 ppb d'U+Th, selon les revendications 1,2 ou 3, caractérisé en ce que le raffinage électrolytique est suivi d'une purification physique de rendement compris entre 30 et 80%, pratiquée en creuset haute pureté à teneur U+Th < 1 ppm.

**Patentansprüche**

1. Verfahren zur Herstellung von Aluminium einer Reinheit über 99,998 %, mit einem Gehalt an Seltenen Erden unter 100 ppb und einem Gesamtgehalt an Uran und Thorium unter 20 ppb,
dadurch gekennzeichnet,
daß man einen ersten Arbeitsgang fraktionierter Kristallisation mit einem Ausbringen an vorgereinigtem Metall im Bereich von 50 bis 80 % durchführt und dann eine elektrolytische Raffination dieses vorgereinigten Metalls durch das 3-Schichten-Verfahren im Bad geschmolzener Halogenidsalze mit einem Ausbringen an endgereinigtem Metall über 90 % vornimmt.

2. Verfahren nach dem Anspruch 1, dadurch gekennzeichnet,
daß man die Halogenidsalze, die zur Bildung und Korrektur des elektrolytischen Bades verwendet werden, vorab reinigt.

3. Verfahren nach dem Anspruch 2, dadurch gekennzeichnet,
daß die Reinigung der Salze durch Kontaktierung mit flüssigem Aluminium erfolgt.

4. Verfahren zur Herstellung von Aluminium sehr hoher Reinheit über 99,9995 %, das weniger als 0,1 ppb U+Th enthält, nach den Ansprüchen 1, 2 oder 3,
dadurch gekennzeichnet,
daß auf die elektrolytische Raffination eine physikalische Reinigung eines Ausbringens im Bereich von 30 bis 80 % folgt, die in einem Tiegel hoher Reinheit mit einem Gehalt an U+Th < 1 ppm durchgeführt wird.

**Claims**

1. A process for the preparation of aluminium of above 99.998% purity with a rare earth content of less than 100 ppb and a total uranium + thorium content of less than 20 ppb, characterised in that a first fractionation crystallisation operation is carried out with a yield of pre-purified metal of between 50 and 80%, and then the pre-purified metal is electrolytically refined by way of the 3 layer process in a bath of molten halogenated salts, with a final yield of purified metal of above 90%.

2. A process according to Claim 1, characterised in that the halogenated salts used to make up and correct the electrolytic bath are purified beforehand.

3. A process according to Claim 2, characterised in that the salts are purified by contacting them with liquid aluminium.

4. A process for the preparation of very high purity aluminium, of above 99.9995% purity, containing less than 0.1 ppb U + Th, according to Claims 2, 3 or 4, characterised in that the electrolytic refining operation is followed by physical purification with a yield of between 30 and 80%, carried out in a high purity crucible with a U + Th content of < 1 ppm.